# EUROPEAN PATENT APPLICATION

(11) **EP 2 388 434 A2**
(43) Date of publication of application: **23.11.2011**
(21) Application number: 11166226.8
(22) Date of filing: 16.05.2011
(51) Int. Cl.: F01D 5/06

(54) **Gas turbine engine compressor components comprising thermal barriers and method of using the same**

(30) Priority: 17.05.2010 US 345327 P; 27.08.2010 US 870315
(71) Applicant: General Electric Company, Schenectady, NY 12345 (US)
(72) Inventor: Konitzer, Douglas Gerard, Cincinnati, OH 45069 (US); Huron, Eric Scott, Cincinnati, OH 45069 (US); Hazel, Brian Thomas, Cincinnati, OH 45069 (US)
(74) Representative: Gray, Thomas

(57) **Abstract**

Gas turbine engine compressor disk (10, 12) having a hot flowpath side (16); a shaft (14) having a first surface (13) positioned in the hot flowpath side (16); and a thermal barrier (20) applied to at least the first surface (13) of the shaft (14) wherein the thermal barrier is operable to maintain the temperature of the shaft below about 700°C (1300°F) when the hot flowpath side experiences a service operating temperature of from about 700°C (1300°F) to about 788°C (1450°F).

## Description

### TECHNICAL FIELD

Embodiments described herein generally relate to gas turbine engine compressor components comprising thermal barriers; thermal barrier systems; and methods of using the same. More particularly, embodiments described herein generally relate to gas turbine engine high pressure compressor shafts and thermal barrier systems for use therewith.

### BACKGROUND OF THE INVENTION

Increasingly stringent demands are being imposed on the efficacy of gas turbine engines employed in the aerospace and power generation industries. This demand is driven by the requirement to reduce the consumption of fossil fuels, and in turn, operating costs. One way to improve turbine efficiency is to increase the operating temperature of the engine. For example, the high pressure compressor currently operates at about 700°C (about 1300°F), with the service operating temperature expected to reach about 788°C (about 1450°F) in the future.

With increased operating temperatures comes an increased demand on materials, such as those used to make compressor disks. Not only must these materials be able to withstand the higher operating temperatures, but they must also endure increased mechanical stresses, corrosion, erosion, and other severe operating conditions, while continuing to fulfill lifetime requirements expected by the industry.

One way to address these increased demands is through modification of both the composition and structure of the material used to make the compressor component. More specifically, the composition of the material can be modified to make it capable of operating at the higher temperatures, while the structure of the material, and in particular the grain size, can be increased or decreased depending on whether creep or fatigue, respectively, is the more critical property. However, even with such modifications, there can still be challenges to getting the material to perform properly at increasing temperatures.

Accordingly, there remains a need for additional measures to protect these materials from the high temperature, high stress environments of the compressor section of a gas turbine engine.

### BRIEF DESCRIPTION OF THE INVENTION

Embodiments herein generally relate to gas turbine engine compressor disks comprising: a hot flowpath side; a shaft having a first surface positioned in the hot flowpath side; and a thermal barrier applied to at least the first surface of the shaft wherein the thermal barrier is operable to maintain the temperature of the shaft below about 700°C (1300°F) when the hot flowpath side experiences a service operating temperature of from about 700°C (1300°F) to about 788°C (1450°F).

Embodiments herein also generally relate to thermal barrier systems for a hot flowpath side of a gas turbine engine compressor shaft comprising: a thermal barrier selected from the group consisting of thermal barrier coatings, metal heat shields, and thermal blankets applied to at least a first surface of the compressor shaft wherein the thermal barrier is operable to maintain the temperature of the shaft below about 700°C (1300°F) when the hot flowpath side experiences a service operating temperature of from about 700°C (1300°F) to about 788°C (1450°F).

Embodiment herein also generally relate to methods for reducing service temperature of operation of a gas turbine engine compressor shaft comprising: providing a compressor shaft having a first surface in a hot flowpath side and a second surface in a cool cavity side; applying a thermal barrier to at least the first surface of the compressor shaft wherein the thermal barrier is operable to maintain the temperature of the shaft below about 700°C (1300°F) when the hot flowpath side experiences a service operating temperature of from about 700°C (1300°F) to about 788°C (1450°F).

These and other features, aspects and advantages will become evident to those skilled in the art from the following disclosure.

### BRIEF DESCRIPTION OF THE DRAWINGS

While the specification concludes with claims particularly pointing out and distinctly claiming the invention, it is believed that the embodiments set forth herein will be better understood from the following description in conjunction with the accompanying figures, in which like reference numerals identify like elements.
FIG. 1 is a schematic representation of one embodiment of a high pressure compressor disk in accordance with the description herein; and
FIG. 2 is an enlarged representation of the compressor disk of FIG. 1 having a thermal barrier applied in accordance with the description herein.

### DETAILED DESCRIPTION OF THE INVENTION

Embodiments described herein generally relate to gas turbine engine compressor components comprising thermal barriers; thermal barrier systems; and methods of using the same. More particularly, embodiments described herein generally relate to gas turbine engine high pressure compressor shafts and thermal barrier systems for use therewith.

For purposes of the description herein, the turbine engine compressor component may generally be of any type, however, in one embodiment, the component may be a rotating compressor component, or portion thereof, that experiences a service operating temperature of from about 537°C (about 1000°F) to about 788°C (about 1450°F), and in one embodiment from about 700°C (about 1300°F) to about 788°C (about 1450°F). One example of a rotating compressor component that may benefit from the methods and systems described herein can include, but should not be limited to, compressor disks. While the entire disk may be protected, it may be more advantageous and cost effective to protect a selected portion of the disk, for example, the HPC shaft, as described herein below.

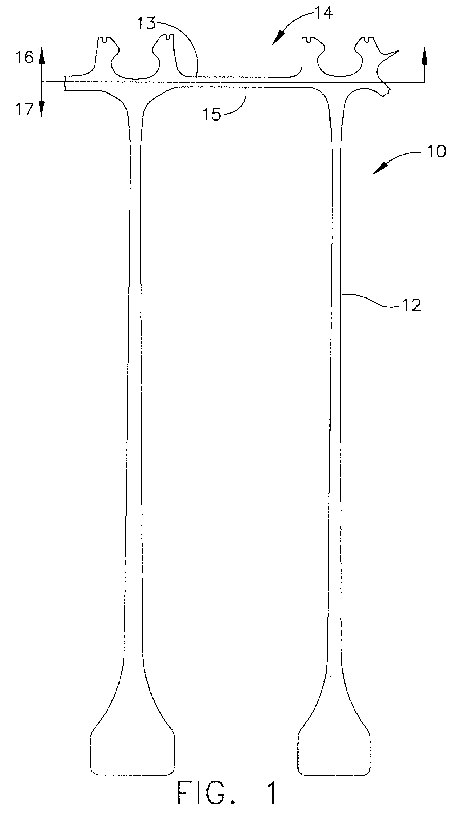

Referring to FIG. 1, a representative embodiment of a turbine engine compressor component 10 is provided. As described previously, compressor component 10 may be of any operable type, such as a disk 12. As shown in FIG. 1 compressor disk 12 may have a shaft 14. Shaft 14 can comprise a first surface 13 located in the hot flowpath side 16 of compressor disk 12, and a second surface 15, located in the cool cavity side 17 of compressor disk 12. During operation, the temperature difference between the hot flowpath side 16 and the cool cavity side 17 can be from about 230°C to about 430°C (about 500°F to about 700°F). During operation, and absent a thermal barrier as set forth herein below, hot air from hot flowpath side 16 can heat the entire shaft 14, including both first surface 13 and second surface 15, to temperatures upwards of 700°C (about 1300°F). Therefore, it may be advantageous to utilize the thermal barriers herein to protect the entire shaft 14, or alternately, the first surface 13 thereof. Using a thermal barrier to protect first surface 13 of shaft 14 can help to maintain the temperature of shaft 14 at a temperature of about 700°C (about 1300°F) even though the service operating temperature of the hot flowpath side 16 of compressor disk 12 can reach up to about 788°C (about 1450°F).

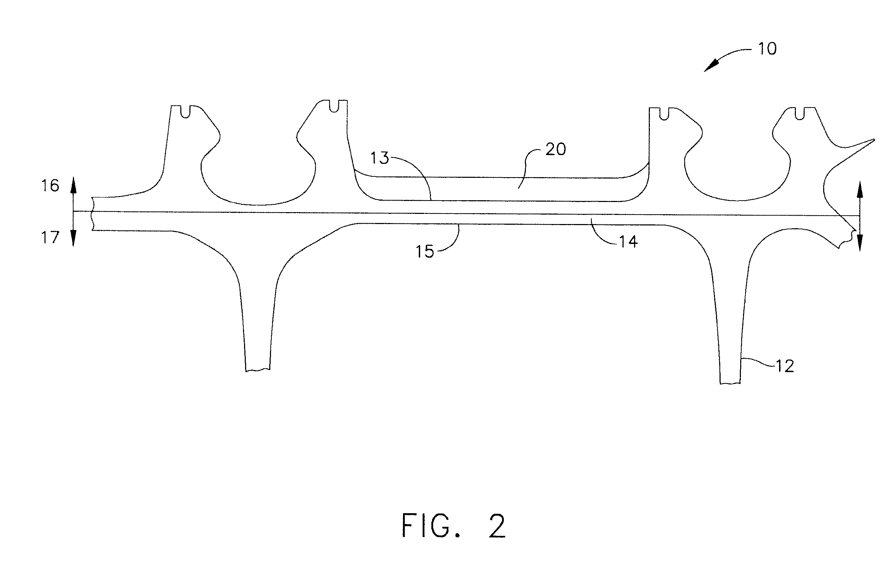

Referring to FIG. 2, compressor shaft 14 can comprise any of a variety of polycrystalline substrates such as metals, metal alloys, or metal superalloys, including those based on nickel, cobalt, iron, or combinations thereof. In one embodiment, shaft 14 may comprise a nickel-based superalloy. As used herein throughout, "based" indicates that the metal substrate comprises a greater percentage of the listed element(s) than any other element. For example, a nickel-based superalloy comprises more nickel than any other element. By way of example and not limitation, one nickel-based superalloy that may be used herein is Rene^{®}88 (General Electric Co.) which is generally comprised, by weight, of about 13% cobalt, about 16% chromium, about 4% molybdenum, about 3.7% titanium, about 2.1% aluminum, about 4% tungsten, about 0.70% niobium, about 0.015% boron, about 0.03% zirconium, and about 0.03% carbon, with the balance nickel and minor impurities.

Thermal barrier 20, as shown in FIG. 2, can be applied to at least a portion of shaft 14, and in particular to first surface 13 of shaft 14. Thermal barrier can comprise any of a variety of materials that comprise the following properties: barrier 20 can be capable of providing a temperature reduction in the metal substrate of at least about 5°C/mm of thermal barrier thickness, and in one embodiment a reduction of at least about 7°C/mm of thermal barrier thickness, as compared to the temperature of the substrate absent the application of thermal barrier 20; barrier 20 can remain affixed to the substrate without decreasing the performance thereof; and, barrier 20 can have a strain tolerance and thermal expansion similar to that of the substrate. Specifically, in one embodiment, thermal expansion can be greater than about 8x10⁻⁶/°C, and in another embodiment, from about 10x10⁻⁶/°C. To accommodate the strain from the centrifugal loading, thermal barrier 20 can have an in-plane modulus of less than 5Msi, and in one embodiment less than 2Msi. Some examples of suitable thermal barriers 20 are set forth below.

In one embodiment, thermal barrier 20 can comprise a thermal barrier coating (TBC). The TBC may generally comprise any low conductivity material, or combination of materials, currently suitable for use as a TBC, for example, a ceramic such as 7% yttria stabilized zirconia. As used herein, "low conductivity" indicates that the conductivity of the TBC is less than that of the substrate of the shaft 14. A layer of the TBC may be applied to HPC shaft 14 using conventional application methods such as, but not limited to, plasma spray processes, chemical vapor deposition processes, electron beam physical vapor deposition processes, sputtering processes, and the like. TBC can provide the desired temperature reduction, adhesion, thermal expansion, and strain tolerance properties set forth previously. Those skilled in the art will understand how to tailor the thickness of the TBC to achieve the previously described properties, as well as how to apply the TBC without damaging the underlying component.

In another embodiment, thermal barrier 20 can comprise a metal heat shield affixed to first surface 13 of shaft 14 on hot flowpath side 16 as shown in FIG. 2. Similar to the compressor component, the metal heat shield can be made from any metal, metal alloy, or metal superalloy including those based on nickel, cobalt, iron, or combinations thereof as defined previously, that is capable of withstanding the temperature and stress experienced by shaft 14 during operation. Some examples of suitable materials for the heat shield can include nickel alloys, commonly available under the tradenames HS 188, or HASTX (available from Haynes International, for example). The metal heat shield can be attached to shaft 14 by a variety of mechanical or chemical attachment methods. Such placement of the heat shield can help achieve the previously described properties.

In yet another embodiment, thermal barrier 20 can comprise a thermal blanket. Similar to the TBC, the thermal blanket may comprise any "low conductivity" material wherein the conductivity of the thermal blanket material is less than that of the substrate of the shaft 14. In this embodiment, the thermal blanket can be applied to insulate the substrate of shaft 14 from hot flow path air. In this way, shaft 14 can be kept cooler by backside cooling air. In one embodiment, the thermal blanket can reduce the temperature of shaft 14 by between about 55°C (100°F) and about 83°C (150°F). Those skilled in the art will understand how to tailor the thickness of the thermal blanket to achieve the previously described properties

The thermal barriers described herein for application to HPC shaft can reduce the amount of heat that reaches the shaft. This reduction in heat can result in both reduced thermal stress on the HPC shaft, as well as a lower service operating temperature of the shaft. The addition of the thermal barrier can allow the rotating compressor component to be fabricated from materials having a lower temperature capability than used currently, without sacrificing performance.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A gas turbine engine compressor disk (10, 12) comprising:
a hot flowpath side (16);
a shaft (14) having a first surface (13) positioned in the hot flowpath side (16);
and
a thermal barrier (20) applied to at least the first surface (13) of the shaft (14)
wherein the thermal barrier is operable to maintain the temperature of the shaft below about 700°C (1300°F) when the hot flowpath side experiences a service operating temperature of from about 700°C (1300°F) to about 788°C (1450°F).

2. A disk (10, 12) according to claim 1 comprising a polycrystalline substrate selected from the group consisting of metals, metal alloys, and metal superalloys based on nickel, cobalt, iron, and combinations thereof.

3. A disk (10, 12) according to any of claims 1 or 2 wherein the thermal barrier (20) comprises a thermal expansion of greater than about 8x10⁻⁶/°C.

4. A disk (10, 12) according to any of claims 1, 2 or 3 wherein the thermal barrier (20) comprises an in-plane modulus of less than 5Msi.

5. A disk (10, 12) according to any of claims 1, 2, 3 or 4 wherein the thermal barrier (20) is capable of providing a reduction in the service operating temperature of the shaft of at least about 5°C/mm of thermal barrier.

6. A disk (10, 12) according to any of claims 1, 2, 3, 4 or 5 comprising a thermal barrier (20) selected from the group consisting of thermal barrier coatings, metal heat shields, and thermal blankets.

7. A disk (10, 12) according to claim 6 wherein the thermal barrier coating comprises yttria stabilized zirconia.

8. A disk (10, 12) according to claim 6 wherein the metal heat shield comprises a material selected from the group consisting of metals, metal alloys, and metal superalloys based on nickel, cobalt, iron, and combinations thereof.

9. A disk (10, 12) according to claim 6 wherein the thermal blanket comprises a low conductivity material.

10. A method for reducing service temperature of operation of a gas turbine engine compressor shaft comprising:
providing a compressor shaft having a first surface in a hot flowpath side and a second surface in a cool cavity side; and
applying a thermal barrier to at least the first surface of the compressor shaft
wherein the thermal barrier is operable to maintain the temperature of the shaft below about 700°C (1300°F) when the hot flowpath side experiences a service operating temperature of from about 700°C (1300°F) to about 788°C (1450°F).

11. The method of claim 10, comprising providing a compressor shaft comprising a polycrystalline substrate selected from the group consisting of metals, metal alloys, and metal superalloys based on nickel, cobalt, iron, and combinations thereof.

12. The method of claim 11, comprising applying a thermal barrier capable of providing a reduction in the service operating temperature of the shaft of at least about 5°C/mm of thermal barrier thickness.

13. The method of claim 11, comprising applying a thermal barrier having a thermal expansion of greater than about 8x10⁻⁶/°C.

14. The method of claim 11, comprising applying a thermal barrier having an in-plane modulus of less than 5Msi.

15. The method of claim 14, wherein the thermal barrier is selected from the group consisting of thermal barrier coatings, metal heat shields, and thermal blankets.
